# EUROPÄISCHE PATENTANMELDUNG

(11) **EP 4 407 391 A1**
(43) Veröffentlichungstag der Anmeldung: **31.07.2024**
(21) Anmeldenummer: 23153200.3
(22) Anmeldetag: 25.01.2023
(51) Int. Cl.: G05B 19/18

(54) **STEUERUNG EINER KÜHLMITTEL- UND/ODER SPÄNEFÖRDEREINRICHTUNG**

(71) Anmelder: Siemens Aktiengesellschaft, 80333 München (DE)
(72) Erfinder: Alkafafi, Loay, 91058 Erlangen (DE); Andreo, Gaelle, 91056 Erlangen (DE); Bock, Marco, 91056 Erlangen (DE); Kreilos, Tobias, 77746 Schutterwald (DE); Pitz, Thomas, 71277 Rutesheim (DE); Rack, Philip Joachim, 70197 Stuttgart, S-West (DE); Schermann, Aleksandra, 70771 Leinfelden-Echterdingen (DE); Spielmann, Ralf, 70569 Stuttgart (DE)
(74) Vertreter: Siemens Patent Attorneys

(57) **Zusammenfassung**

Die Erfindung betrifft ein Verfahren zur Steuerung eines Werkzeugmaschinensystems (1), umfassend wenigstens eine Werkzeugmaschine (2) eine Fördereinrichtung (19) sowie eine Steuereinrichtung (3), wobei zur Bearbeitung eines Werkstücks (16) ein Werkzeug (13) mittels der mit der Werkzeugmaschine (2) verbundenen Steuereinrichtung (3) und wenigstens einer davon gesteuerten Maschinenachse (X, Y, Z, B, C) relativ zu dem Werkstück (16) bewegt wird, wobei die Bearbeitung des Werkstücks (16) und insbesondere die Relativbewegung zwischen dem Werkzeug (13) und dem Werkstück (16) in Abhängigkeit von in der Steuereinrichtung (3) vorliegender Bearbeitungs- und/oder Prozessparameter erfolgt und wobei die Fördereinrichtung (19) mittels wenigstens eines Betriebsparameters der Fördereinrichtung (19) einstellbar ist.

Die Erfindung sieht vor, dass der Betriebsparameter dynamisch während der Bearbeitung des Werkstücks (16) an wenigstens einen der Bearbeitungs- und/oder Prozessparameter angepasst wird.

Durch die Erfindung können beim Betrieb der Fördereinrichtung (19) Energie und/oder Betriebsmittel eingespart werden, ohne dabei die beabsichtigte Wirkungsweise der Fördereinrichtung (19) zu beeinträchtigen.

## Beschreibung

Die Erfindung betrifft ein Verfahren zur Steuerung eines Werkzeugmaschinensystems, umfassend wenigstens eine Werkzeugmaschine eine Fördereinrichtung sowie eine Steuereinrichtung, wobei zur Bearbeitung eines Werkstücks ein Werkzeug mittels der mit der Werkzeugmaschine verbundenen Steuereinrichtung und wenigstens einer davon gesteuerten Maschinenachse relativ zu dem Werkstück bewegt wird, wobei die Bearbeitung des Werkstücks und insbesondere die Relativbewegung zwischen dem Werkzeug und dem Werkstück in Abhängigkeit von in der Steuereinrichtung vorliegender Bearbeitungs- und/oder Prozessparameter erfolgt und wobei die Fördereinrichtung mittels wenigstens eines Betriebsparameters der Fördereinrichtung einstellbar ist.

Ferner betrifft die Erfindung eine Steuereinrichtung zur Steuerung einer Werkzeugmaschine und einer der Werkzeugmaschine zugeordneten Fördereinrichtung, insbesondere einer Kühlmittel- und/oder Spänefördereinrichtung.

Darüber hinaus betrifft die Erfindung einen digitalen Zwilling einer Steuereinrichtung und/oder einer Werkzeugmaschine und/oder einer Fördereinrichtung.

Aktuell gibt es großen Bedarf an einer Energieverbrauchsminimierung. Insbesondere im Maschinenbau und speziell im Werkzeugmaschinenbau ist der Trend zu erkennen, dass die Maschinen immer weniger Energie verbrauchen dürfen, um CO₂ einzusparen oder den Bedarf an fossilen Energieträgern zu verkleinern.

Sieht man sich den Energieverbrauch in einer Werkzeugmaschine an, ist der Energieverbrauch beim Kühlmittel besonders hoch. Kühlmittel ist die Flüssigkeit, die während der Bearbeitung auf das Werkstück und/oder das Werkzeug gesprüht wird. Häufig ist dem Kühlmittel auch ein Schmiermittel beigemischt. Unter dem Begriff "Kühlmittel" ist im Rahmen der Erfindung auch ein derartiges "Kühlschmiermittel" zu verstehen. Durch den Einsatz eines solchen Kühl- bzw. Kühlschmiermittels wird die Temperatur in der Schnittzone gesenkt und die thermische Belastung für das Werkzeug verringert. Außerdem trägt das Kühlmittel zur Spanabfuhr bei bzw. verbessert diese und senkt die Metallstaubkonzentration in der Fertigungsumgebung.

Unter einer Werkzeugmaschine versteht der Fachmann eine zum Zweck einer automatisierten Fertigung eingesetzte Maschine, bei der zur Bearbeitung eines Werkstücks ein Werkzeug relativ zu dem Werkstück bewegt werden kann. Auch Roboter können zur Bearbeitung von Werkstücken als Werkzeugmaschinen verwendet werden.

Eine Werkzeugmaschine umfasst zumindest eine lagegeregelte Achse, so dass mittels eines der Achse zugeordneten lagegeregelten Antriebs wenigstens ein erstes, direkt mit dem Antrieb verbundenes Maschinenelement relativ zu einem zweiten (weiteren) Maschinenelement der Werkzeugmaschine verstellbar ist.

Vorzugsweise umfasst eine Werkzeugmaschine mehr als eine, insbesondere wenigstens drei lagegeregelte Achsen, mittels der das Werkzeug relativ zu dem Werkstück im Raum positioniert und orientiert werden kann.

Zur Steuerung der Relativbewegung zwischen dem Werkzeug und dem Werkstück ist die Werkzeugmaschine mit einer Steuereinrichtung, insbesondere einer numerischen Steuerung verbunden, die für die Lageregelung der Achsen gemäß einem Programm (Steuerprogramm bzw. Teileprogramm) sorgt.

Das Teileprogramm setzt sich dabei zumindest überwiegend aus Steuerbefehlen (häufig in G-Code) zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Durch das in Eingriff befindliche Werkzeug wird in der Regel Wärme erzeugt, die häufig mittels eines Kühlmittels von dem Werkzeug abgeführt werden muss, um eine Beschädigung des Werkzeugs durch Überhitzung zu verhindern. Zur Bereitstellung des Kühlmittels am Werkzeug ist der Werkzeugmaschine daher eine Kühlmittelfördereinrichtung zugeordnet, d.h. mit der Werkzeugmaschine verbunden bzw. von dieser umfasst. In der Regel befindet sich das Kühlmittel in einem Kühlmittelreservoir und wir dem Werkzeug mittels einer Kühlmittelpumpe über einen Kühlmittelkreislauf zugeführt.

Häufig dient das Kühlmittel außer zum Kühlen (und Schmieren) auch zum Abtransport von Spänen aus der Werkzeugmaschine, die bei einer spanabhebenden Bearbeitung des Werkstücks anfallen. Die Späne werden dabei durch den Kühlmittelfluss von dem Werkzeug weg transportiert.

Eine Werkzeugmaschine mit einer Kühlmittelfördereinrichtung ist z.B. aus der DE 102014115015 A1 bekannt.

Neben der Kühlmittelfördereinrichtung umfassen Werkzeugmaschinen häufig auch eine separate Spänefördereinrichtung, die ebenfalls zum Abtransport der anfallenden Späne aus der Maschine dient.

Eine Werkzeugmaschine mit einer Spänefördereinrichtung ist z.B. aus der DE 102018204125 A1 bekannt.

Bei Werkzeugmaschinen gibt es normalerweise Hilfsfunktionen (Befehle) im Teileprogramm, z.B. M8, M9, die die Kühlmittelförderung an- (M8) und ausschalten (M9).

Für das Einschalten eines Hochdruckkühlmittels gibt es zusätzliche Hilfsfunktionen, die das Hochdruckkühlmittel ein- und ausschalten.

Die Hilfsfunktionen werden explizit im Teileprogramm programmiert und damit realisiert oder bei einem Werkzeugwechsel implizit mit ausgegeben und damit realisiert.

Eine Aufgabe der vorliegenden Erfindung ist es, bei einer einer Werkzeugmaschine zugeordneten Fördereinrichtung, insbesondere einer Kühlmittel- und/oder Spänefördereinrichtung, den Energiebedarf zu senken.

Diese Aufgabe wird durch ein Verfahren mit den in Patentanspruch 1 angegebenen Verfahrensschritten gelöst, also ein Verfahren zur Steuerung eines Werkzeugmaschinensystems, umfassend wenigstens eine Werkzeugmaschine eine Fördereinrichtung sowie eine Steuereinrichtung,
- wobei zur Bearbeitung eines Werkstücks ein Werkzeug mittels der mit der Werkzeugmaschine verbundenen Steuereinrichtung und wenigstens einer davon gesteuerten Maschinenachse relativ zu dem Werkstück bewegt wird,
- wobei die Bearbeitung des Werkstücks und insbesondere die Relativbewegung zwischen dem Werkzeug und dem Werkstück in Abhängigkeit von in der Steuereinrichtung vorliegender Bearbeitungs- und/oder Prozessparameter erfolgt,
- wobei die Fördereinrichtung mittels wenigstens eines Betriebsparameters der Fördereinrichtung einstellbar ist und
- wobei der Betriebsparameter dynamisch während der Bearbeitung des Werkstücks an wenigstens einen der Bearbeitungs- und/oder Prozessparameter angepasst wird.

Die Erfindung bietet den Vorteil, dass damit eine Synchronisierung der Fördereinrichtung zum Teileprogramm bzw. zur Bearbeitung erfolgt. Das bedeutet, dass beispielsweise bei einer als Kühlmittel- und/oder Spänefördereinrichtung ausgebildeten Fördereinrichtung das Kühlmittel nur dann angewendet wird und somit Energie verbraucht, wenn das Werkzeug auch tatsächlich im Eingriff ist und durch die Reibung Wärme erzeugt und entsprechend Kühlmittel zur Abkühlung benötigt wird. Wichtig dabei ist, dass die Wärme nicht in das Werkzeug geht, sondern im Idealfall "im Span" mit dem Kühlmittel abtransportiert wird.

Ein weiteres Ausführungsbeispiel betrifft die Kunststoff- oder Holzbearbeitung, bei der die Fördereinrichtung Druckluft zum Kühlen und/oder Schmieren verwendet (fördert) und bei der der Betriebsparameter z.B. den Druck und/oder die Menge an Druckluft einer Druckluftanlage steuert und dynamisch an den aktuellen Bedarf anpasst.

Unter der "Bearbeitung des Werkstücks" ist im Rahmen der Erfindung der Gesamtprozess zu verstehen, währenddessen sich das Werkstück in der Werkzeugmaschine befindet, also auch Nebenzeiten, in denen sich das Werkzeug nicht in Eingriff befindet (z.B. Eilgang-Bewegungen, Werkzeugwechsel etc.).

Häufig ist es möglich, während der Nebenzeiten die Fördereinrichtung, beispielsweise Kühlmittel- und/oder Späneförderung, ganz abzuschalten oder zumindest stark zu reduzieren, da hier weder Späne noch Wärme durch das Werkzeug produziert werden. Lediglich für die Temperierung der Maschine ist ggf. etwas Kühlmittel notwendig. Die Kühlmittel- und/oder Spänefördereinrichtung ist demnach - zumindest im Wesentlichen - nur dann aktiv, wenn sie auch tatsächlich gebraucht wird. Dies trägt wesentlich zur Energieeinsparung bei.

Die Bearbeitung des Werkstücks und insbesondere die Relativbewegung zwischen dem Werkzeug und dem Werkstück erfolgen in Abhängigkeit von in der Steuereinrichtung, insbesondere einer numerischen Steuerung, vorliegender Bearbeitungs- und/oder Prozessparameter.

Bearbeitungsparameter ergeben sich in der Regel aus dem Teileprogramm. Sie bestimmen im Wesentlichen die Relativbewegung zwischen dem Werkzeug und dem Werkstück. Darunter fallen z.B. die Werkzeugbahn, der Vorschub, die Schnittgeschwindigkeit, die Spindeldrehzahl oder die Bahngeschwindigkeit.

Daneben haben auch Prozessparameter, die nicht direkt die Relativbewegung zwischen dem Werkzeug und dem Werkstück bestimmen, Einfluss auf die Bearbeitung des Werkstücks. Darunter fallen z.B. das aktive Werkzeug (Art, Größe, Anzahl der Schneiden etc. des Werkzeugs), das Werkzeugmaterial, das Werkstückmaterial, die Kraft an der Spindel, die Stromaufnahme der Spindel, die Zerspanungsleistung, die Abdrängung des Werkzeugs, die Bearbeitungsart (Schruppen, Schlichten) oder die räumliche Anordnung des Werkzeugs und/oder des Werkstücks.

Während des Betriebs werden bei der Bearbeitung des Werkstücks in der Werkzeugmaschine häufig Wärme und/oder Späne erzeugt. Die Wärme und/oder die Späne werden mittels der Fördereinrichtung, insbesondere Kühlmittel- und/oder Spänefördereinrichtung, aus der Werkzeugmaschine abgeführt.

Gemäß der Erfindung ist die Fördereinrichtung mittels wenigstens eines Betriebsparameters der Fördereinrichtung einstellbar, wodurch Fördereigenschaften der Fördereinrichtung veränderbar sind. Beispielsweise ist eine Kühlmittel- und/oder Spänefördereinrichtung in ihrer Betriebsweise hinsichtlich Kühlmittel- und/oder Spänefördereigenschaften mittels wenigstens eines Betriebsparameters einstellbar. Im einfachsten Fall kann dies ein situationsabhängiges, automatisches Ein- bzw. Ausschalten der Fördereinrichtung bedeuten.

Allgemein beeinflussen die Betriebsparameter der Fördereinrichtung Eigenschaften der Fördereinrichtung, insbesondere des Betriebs der Fördereinrichtung. Zu diesen Eigenschaften zählen z.B. (Geschwindigkeit, Drehzahl, Temperatur, Druck etc, z.B. Geschwindigkeit/Drehzahl von Antrieben, z.B. von Pumpen oder Förderbändern, Temperatur eines Kühl- oder eines Schmiermittels; der Zu- oder abgeführten Menge, Druck eines Kühl- oder eines Schmiermittels). Häufig beeinflussen die Betriebsparameter die zu- oder abgeführte Menge eines Fördergutes.

In der Regel ist das Kühlmittel ein Fluid, insbesondere Luft oder Wasser (ggf. mit Beimischungen, z.B. von Schmierstoffen). Zu den Kühlmittelfördereigenschaften gehören z.B. die Durchflussmenge des Kühlmittels pro Zeiteinheit, der Kühlmittel-Druck, die Kühlmitteltemperatur oder ein Zielpunkt des Kühlmittelstrahls.

Zu den Spänefördereigenschaften gehört z.B. das Spanvolumen, das pro Zeiteinheit aus der Werkzeugmaschine transportiert werden kann.

Vorteilhaft kann auf Kühlmittel- und/oder Spänefördereigenschaften Einfluss genommen, diese also verändert bzw. eingestellt werden. Z.B. kann bei Bedarf die Kühlmittel-Durchflussmenge erhöht, der Druck erhöht oder die Kühlmitteltemperatur abgesenkt werden.

Die genannten Betriebsparameter bzw. Einstellungen können stufenweise (in der Regel mit einigen wenigen Stufen) erfolgen, vorteilhaft sind sie jedoch stufenlos bzw. nahezu stufenlos regelbar.

Die Erfindung sieht vor, dass wenigstens ein Betriebsparameter, der wenigstens eine der o.g. Einstellungen bzw. Eigenschaften beeinflusst, dynamisch während der Bearbeitung des Werkstücks an wenigstens einen Bearbeitungs- und/oder wenigstens einen Prozessparameter angepasst wird.

Bei einer bevorzugten Ausführungsform der Erfindung gilt dies auch für Zeiträume, in denen sich das Werkzeug in Kontakt bzw. Eingriff mit dem Werkstück befindet. Auch für diese Zeiträume wird der Betriebsparameter dynamisch an wenigstens einen der Bearbeitungs- und/oder Prozessparameter angepasst, wobei sich in diesem Fall der betreffende Bearbeitungs- und/oder Prozessparameter insbesondere direkt auf die Relativbewegung zwischen dem Werkstück und dem in Kontakt bzw. Eingriff befindlichen Werkzeug auswirkt.

Beispielsweise könnte der Fall eintreten, dass infolge einer Abnutzung des Werkzeugs und einer dadurch bedingten höheren Reibung die Stromaufnahme der Spindel kontinuierlich steigt. Der Prozessparameter "Stromaufnahme der Spindel" kann durch die numerische Steuerung ermittelt werden. Durch die Reibung wird jedoch auch mehr Wärme erzeugt, die durch das Kühlmittel abgeführt werden muss. So kann durch die numerische Steuerung der Betriebsparameter "Kühlmitteldurchfluss" erhöht und somit an die höhere Wärmeerzeugung angepasst werden.

Für den Benutzer ergibt sich weiterhin der Vorteil, dass er sich um die Steuerung der Fördereinrichtung keine Gedanken machen muss. Anstatt wie bisher beispielsweise entsprechende Befehle in ein Teileprogramm zu programmieren, ermittelt die numerische Steuerung nun anhand der in der Steuereinrichtung (insbesondere numerischen Steuerung) vorliegenden Bearbeitungs- und/oder Prozessparameter automatisch optimierte bzw. optimale, insbesondere dynamisch an die aktuelle Bearbeitung angepasste Betriebsparameter der Fördereinrichtung. Einerseits muss sich daher der Benutzer nicht selbst um die Gewinnung bzw. Einstellung dieser Betriebsparameter kümmern. Andererseits sind die Betriebsparameter damit stets optimal an die aktuelle Bearbeitungssituation - und nicht wie bisher an einen möglicherweise auftretenden "Worst Gase" - angepasst. Dies spart Ressourcen wie Betriebsmittel oder Energie.

Beispielsweise ergibt sich ein Vorteil der Erfindung daraus, dass die Kühlmittel- und/oder Spänefördereinrichtung stets so an die aktuelle Bearbeitung des Werkstücks angepasst wird, dass sie ihre Aufgabe mit einer gegenüber einer herkömmlichen Kühlmittel- und/oder Spänefördereinrichtung reduzierten, insbesondere der minimalen zum Erfüllen der Aufgabe erforderlichen Energie erfüllen kann. Die betreffenden Einrichtungen sind daher im laufenden Betrieb nicht ständig an einen möglichen "Worst Gase" angepasst. Die Menge und Temperatur des Kühlmittels sind exakt auf die aktuelle Bearbeitung abgestimmt und die Späneförderer bewegt sich mit einer Geschwindigkeit, die genau an das aktuell anfallende Spanvolumen angepasst ist. Über den gesamten Bearbeitungsprozess betrachtet können dadurch die Energieaufnahme der Kühlmittel- und/oder Spänefördereinrichtung sowie die Menge an Kühlmittel im Vergleich zu der herkömmlichen Vorgehensweise deutlich gesenkt werden.

Die Einstellung (automatische Anpassung) des Betriebsparameters kann - je nach Bedarf - kontinuierlich, quasi kontinuierlich (in sehr kleinen Schritten) oder in diskreten Schritten bzw. Stufen erfolgen. In jedem Fall geht sie jedoch über ein bloßes Ein- oder Ausschalten hinaus.

Eine Ausführungsform der Erfindung sieht vor, dass mittels der Kühlmittel- und/oder Spänefördereinrichtung ein Fluidstrahl zur Wärme- und/oder Späneabfuhr erzeugt wird, wobei der Fluidstrahl anhand von wenigstens einem Fluidstrahlparameter (Betriebsparameter) einstellbar ist und wobei der Fluidstrahlparameter dynamisch während der Bearbeitung des Werkstücks an wenigstens einen Bearbeitungs- und/oder wenigstens einen Prozessparameter angepasst wird.

Vorzugsweise betrifft der Fluidstrahlparameter eine (Durchfluss-) Menge, eine Richtung (insbesondere Orientierung des Fluidstrahls am Strahlaustritt einer Düse), einen Druck, eine Form des Fluidstrahls (spritzen, sprühen und nebeln bzw. Vollkegel-, Hohkegel-, Flach- und Vollstrahl) oder eine Temperatur des Fluids bzw. Fluidstrahls.

Häufig wird der Fluidstrahlparameter nicht direkt, sondern indirekt eingestellt, z.B. über eine Erhöhung einer Pumpendrehzahl.

Häufig zieht die Anpassung eines Betriebsparameters die Änderung wenigstens eines weiteren Betriebsparameters nach sich. So kann es beispielsweise sein, dass eine Änderung des von einer Kühlmittelpumpe erzeugten Drucks an der Düse (Strahlaustrittsöffnung) des Kühlmittelstrahls eine Anpassung der Orientierung der Düse bzw. des Kühlmittelstrahls nach sich zieht, so dass ein beabsichtigter Strahlauftreffpunkt, insbesondere am Werkzeug, beibehalten wird.

Eine Ausführungsform der Erfindung sieht vor, dass für die Wärmeabfuhr und für eine Späneabfuhr jeweils wenigstens ein Minimum für Druck und/oder Menge des Fluidstrahls bestimmt werden, wobei der größere Wert des jeweiligen Minimums für den Druck und/oder die Menge als Fluidstrahlparameter eingestellt wird.

Damit wird gewährleistet, dass stetes beide Aufgaben, Kühlung und Abfuhr von Spänen, in dem dafür vorgesehenen Maß und insgesamt energieoptimiert durchgeführt werden.

Bei einer Ausführungsform der Erfindung ist die Fördereinrichtung als Kühlmittel- und/oder Spänefördereinrichtung ausgebildet, wobei mittels eines Späneförderers Späne aus der Werkzeugmaschine transportiert werden, wobei der Späneförderer anhand von wenigstens einem Spänefördererparameter einstellbar ist und wobei der Spänefördererparameter dynamisch während der Bearbeitung des Werkstücks an den Bearbeitungs- und/oder Prozessparameter angepasst wird.

Als Späneförderer kommt allgemein jede Einrichtung in Betracht, die dazu geeignet oder bestimmt ist bzw. dazu beiträgt, dass während der Bearbeitung des Werkstücks anfallende Späne aus der Werkzeugmaschine abtransportiert werden. Übliche Späneförderer weisen ein Transportband (Späneförderband) oder eine (Späne-) Förderschnecke für den Abtransport der Späne auf. Daneben sind jedoch auch andere Systeme bekannt, die z.B. mit Druckluft arbeiten.

Vorteilhaft sieht diese Ausführungsform der Erfindung vor, dass wenigstens ein die Funktion des Späneförderers beeinflussender Betriebsparameter, hier in Form des Spänefördererparameters, z.B. die Drehzahl eines Motors, der ein Späneförderband antreibt, dynamisch während der Bearbeitung des Werkstücks an den Bearbeitungs- und/oder Prozessparameter angepasst wird. So lassen sich Spänefördereigenschaften des Späneförderers, im Beispiel die pro Zeiteinheit transportierbare Fördermenge an Spänen, stets exakt an die gerade in der Maschine anfallende Menge an Spänen anpassen und es wird nicht unnötig Energie für den Abtransport der Späne verbraucht.

Eine Ausführungsform der Erfindung sieht vor, dass der Betriebsparameter mittels der Steuereinrichtung, insbesondere der numerischen Steuerung bestimmt wird. Diese Ausführungsform hat den Vorteil, dass keine weitere Recheneinrichtung zum Bestimmen des Betriebsparameters erforderlich ist. Vorteilhaft kann bei dieser Ausführungsform die Steuereinrichtung, insbesondere die numerische Steuerung, auch die Kühlmittel- und/oder Spänefördereinrichtung - mit dem betreffenden Betriebsparameter - direkt steuern. Auf eine weitere Steuereinrichtung zum Steuern der Kühlmittel- und/oder Spänefördereinrichtung kann dann ggf. verzichtet werden.

Eine Ausführungsform der Erfindung sieht vor, dass der Betriebsparameter mittels einer externen Recheneinrichtung, beispielsweise eines Edge-Computers oder einer SPS bzw. PLC (Speicherprogrammierbaren Steuerung bzw. Programmable Logic Controller) bestimmt wird. Die Bestimmung des Betriebsparameter in einer externen Recheneinrichtung bietet den Vorteil, dass damit die der Werkzeugmaschine zugeordnete Steuereinrichtung (numerische Steuerung) mit der Bestimmung des Betriebsparameter nicht zusätzlich belastet wird.

Eine Ausführungsform der Erfindung sieht vor, dass der Betriebsparameter anhand einer Simulation der Bearbeitung des Werkstücks bestimmt wird. Die Simulation kann dabei sowohl direkt in der Steuereinrichtung als auch in einer externen Recheneinrichtung erfolgen. Die Bestimmung des Betriebsparameter anhand einer Simulation bietet den Vorteil, dass damit der Betriebsparameter schon vor der eigentlichen realen Bearbeitung des Werkstücks erfolgen kann. Auch dies trägt beispielsweise dazu bei, die numerische Steuerung während der Bearbeitung des Werkstücks nicht zusätzlich mit der Bestimmung des Betriebsparameter zu belasten.

Eine Ausführungsform der Erfindung sieht vor, dass die Simulation mittels eines digitalen Zwillings wenigstens einer Komponente des Werkzeugmaschinensystems erfolgt.

Ein digitaler Zwilling ist ein sehr genaues digitales Abbild der betreffenden Komponente des Werkzeugmaschinensystems, insbesondere aller wesentlichen Komponenten des Werkzeugmaschinensystems, der das Verhalten der realen Komponente sehr gut widerspiegelt. Vorteilhaft sind die Werkzeugmaschine, die Steuereinrichtung (numerische Steuerung) sowie die Kühlmittel- und/oder Spänefördereinrichtung von dem digitalen Zwilling umfasst. Damit gelingt eine noch bessere Anpassung des Betriebsparameters an die konkret vorgesehene WerkstückBearbeitung.

Die Bestimmung des Betriebsparameters anhand des digitalen Zwillings kann vor oder während, insbesondere synchron zu der realen Bearbeitung erfolgen. Vorteilhaft wird auch hier der digitale Zwilling auf einer - aus Sicht der numerischen Steuerung - externen Recheneinrichtung, z.B. einem Edge-Computer oder einem Industrie-PC gerechnet.

Ist die Kühlmittelfördereinrichtung und/oder die Spänefördereinrichtung von dem digitalen Zwilling mit umfasst, so lässt sich die beabsichtigte Wirkungsweise der Kühlmittel- und/oder Spänefördereinrichtung mit dem für den betreffenden Betriebsparameter bestimmten Wert anhand des digitalen Zwillings verifizieren, ggf. bevor der entsprechenden Betriebsparameter bei der realen Kühlmittel- und/oder Spänefördereinrichtung eingestellt wird.

Eine Ausführungsform der Erfindung sieht vor, dass der Betriebsparameter mittels eines thermischen Modells der Bearbeitung ermittelt wird.

Die Erstellung und Verwendung eines thermischen Modells zur Simulation einer Bearbeitung ist dem Fachmann bekannt. Anhand des thermischen Modells kann die während der Bearbeitung erzeugte Wärme, insbesondere die Temperaturentwicklung am in Eingriff bzw. Kontakt mit dem Werkstück befindlichen Werkzeug oder in dem aktuell bearbeiteten Bereich des Werkstücks, sehr genau ermittelt werden. Entsprechend genau kann damit auch der betreffende Betriebsparameter bestimmt bzw. die betreffende Eigenschaft hinsichtlich der Betriebsweise der Kühlmittel- und/oder Spänefördereinrichtung eingestellt werden, so dass das applizierte Kühlmittel exakt an die aktuelle Bearbeitungssituation angepasst ist.

Eine Ausführungsform der Erfindung sieht vor, dass mittels der Werkzeugmaschine eine spanabhebende Bearbeitung des Werkstücks durchgeführt wird, wobei die während der spanabhebenden Bearbeitung des Werkstücks aufgrund von Reibung zwischen dem Werkzeug und dem Werkstück erzeugte Wärme ermittelt wird und wobei der Betriebsparameter derart bestimmt wird, dass dadurch eine durch die Kühlmittelfördereinrichtung bewirkte Wärmeabfuhr dynamisch an die erzeugte Wärme angepasst wird. Eine spanabhebende Bearbeitung ist der übliche und häufigste Anwendungsfall der Erfindung. Die Erfindung ist jedoch nicht auf diesen Anwendungsfall beschränkt. Beispielsweise beim Auftragsschweißen wird ebenfalls viel Wärme erzeugt, die ggf. erfindungsgemäß mittels eines Kühlmittels abgeführt werden muss.

Ein beabsichtigtes Ziel der Erfindung ist es, dass der Betriebsparameter dynamisch während der Bearbeitung des Werkstücks derart an wenigstens einen Bearbeitungs- und/oder wenigstens einen Prozessparameter angepasst wird, dass eine Leistungsaufnahme der Kühlmittel- und/oder Spänefördereinrichtung auf ein notwendiges Minimum reduziert wird. Die Erfindung trägt so dazu bei, nicht nur den Energiebedarf der Kühlmittel- und/oder Spänefördereinrichtung zu minimieren, sondern auch den des Bearbeitungsprozesses insgesamt. Dadurch lässt sich die Bearbeitung von Werkstücken bzw. die Produktion insgesamt kostenoptimieren.

Die eingangs gestellte Aufgabe wird ferner gelöst durch eine Steuereinrichtung zur Steuerung einer Werkzeugmaschine und einer der Werkzeugmaschine zugeordneten Fördereinrichtung, insbesondere zur Durchführung eines Verfahrens nach einem der Ansprüche 1 bis 14,
- wobei zur Bearbeitung eines Werkstücks ein Werkzeug mittels der mit der Werkzeugmaschine verbundenen Steuereinrichtung und wenigstens einer davon gesteuerten Maschinenachse relativ zu dem Werkstück bewegbar ist,
- wobei die Bearbeitung des Werkstücks und insbesondere die Relativbewegung zwischen dem Werkzeug und dem Werkstück in Abhängigkeit von in der Steuereinrichtung vorliegender Bearbeitungs- und/oder Prozessparameter erfolgt,
- wobei die Fördereinrichtung mittels wenigstens eines Betriebsparameters der Fördereinrichtung einstellbar ist
- und wobei der Betriebsparameter dynamisch während der Bearbeitung des Werkstücks an wenigstens einen Bearbeitungs- und/oder wenigstens einen Prozessparameter anpassbar ist.

Bei der Steuereinrichtung handelt es sich insbesondere um eine numerische Steuerung bzw. CNC-Steuerung (Computerized Numerical Control) zur Steuerung einer Werkzeugmaschine.

Weiterhin wird die eingangs gestellte Aufgabe gelöst durch einen digitalen Zwilling einer Steuereinrichtung und/oder einer Werkzeugmaschine und/oder einer Fördereinrichtung zur Simulation eines Verfahrens nach einem der Ansprüche 1 bis 14.

Der digitale Zwilling liegt dabei jeweils insbesondere in Form eines Computerprogrammproduktes vor und stellt ein digitales Abbild der betreffenden realen Einrichtung dar, mit dessen Hilfe in Verbindung mit einer geeigneten Recheneinrichtung das Betriebsverhalten der Steuereinrichtung und/oder der Werkzeugmaschine und/oder der Fördereinrichtung simulierbar ist. Auch das oder die Werkzeuge sowie das Werkstück werden (durch entsprechende digitale Zwillinge) von der Simulation mit umfasst. So ist es z.B. möglich, eine anhand eines Teileprogramms vorliegende, beabsichtigte Bearbeitung eines Werkstücks vorab zu simulieren und anhand der Simulation die an dem Werkzeug durch Reibung erzeugte Wärme sowie die Anfallende Menge an Spänen für jeden Bearbeitungszeitpunkt zu berechnen. Aus dieser Simulation bzw. den daraus resultierenden Ergebnissen lassen sich so Betriebsparameter für die reale Fördereinrichtung ableiten. Dadurch kann die Fördereinrichtung während des realen Betriebes dynamisch an die aktuelle Bearbeitung (Bearbeitungssituation) angepasst werden.

Die Erfindung wird nachfolgend anhand von Ausführungsbespielen exemplarisch näher beschrieben und erläutert. Dabei zeigen:
- FIG 1: Eine Werkzeugmaschine zur Durchführung eines erfindungsgemäßen Verfahrens und
- FIG 2: Verfahrensschritte bei der Durchführung eines erfindungsgemäßen Verfahrens.

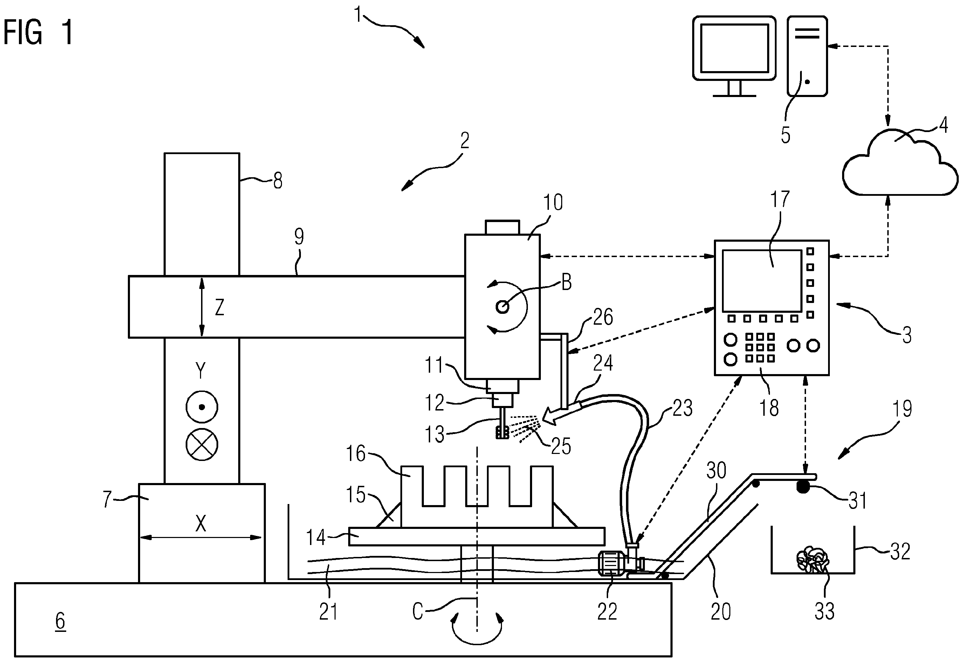

In FIG 1 ist schematisiert ein erfindungsgemäßes Werkzeugmaschinensystem 1 dargestellt. Das Werkzeugmaschinensystem 1 umfasst eine Werkzeugmaschine 2. Diese könnte auch als Roboter (nicht dargestellt) ausgebildet sein, an dessen Arm ein Werkzeug befestigt ist. Ferner umfasst das Werkzeugmaschinensystem 1 eine mit der Werkzeugmaschine 2 verbundene Steuereinrichtung in Form einer numerischen bzw. CNC Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines PCs 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems (MKS) (nicht dargestellt) verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkstücktischachse C, um die ein Werkstücktisch 14 rotierbar ist.

Der Werkstücktisch 14 ist ebenfalls mit dem ruhenden Maschinengestellt 6 verbunden und an dem Werkstücktisch 14 ist mittels der Werkstückhalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem PC 5 bzw. einem CAD/CAM-System und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolationstakt, Lagesollwerte x, y und z für die Linearachsen sowie Winkellagesollwerte β und γ (nicht dargestellt) für die Rundachsen B und C. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der numerischen Steuereinrichtung auch die Dynamik der Relativbewegung bzw. der einzelnen Achsen betreffende Größen, insbesondere die Geschwindigkeit, die Beschleunigung oder der Ruck, ermittelbar bzw. einstellbar.

Das erfindungsgemäße Werkzeugmaschinensystem 1 umfasst ferner eine Kühlmittel- und Spänefördereinrichtung 19, deren wesentliche Komponenten nachfolgend beschrieben werden.

In einem Kühlmittelbehälter 20 der Kühlmittel- und Spänefördereinrichtung 19 befindet sich Kühlmittel 21 in flüssiger Form. Mittels einer Kühlmittelpumpe 22 wird dieses über einen Kühlmittelschlauch 23 und eine Kühlmitteldüse 24 in Form eines Kühlmittelstrahls 25 einem Umgebungsbereich des Werkzeugs 13 zugeführt. So werden während der Bearbeitung des Werkstücks 16 mittels des Werkzeugs 13 Kühlmittel 21 sowohl zur Kühlung des Werkzeugs 13 und des Werkstücks 16 als auch zur Beseitigung von während der Bearbeitung anfallenden Spänen zugeführt.

Die Richtung des Kühlmittelstrahls 25 ist mittels einer verstellbaren Halterung 26 für die Kühlmitteldüse 24 einstellbar. Auch diese Einstellung kann erfindungsgemäß automatisch mittels der CNC-Steuerung 3 erfolgen, so dass der Kühlmittelstrahl 25 stets auf den Bereich der Schneide des Werkzeugs 13 gerichtet ist. Ebenso werden vorteilhaft der Druck des Kühlmittelstrahls 25 sowie die Temperatur und die Menge des zugeführten Kühlmittels 21 automatisch und dynamisch während der Bearbeitung des Werkstücks 16 durch das in Eingriff befindliche Werkzeug 13 an die aktuelle Bearbeitung (Spindeldrehzahl, Vorschubgeschwindigkeit, Bearbeitungsart, aktuelles Werkzeug, Abnutzungsgrad des aktuellen Werkzeugs etc.) mittels der CNC-Steuerung 3 angepasst.

Erfindungsgemäß wäre es auch möglich, dass neben dem Kühlmittel 21 auch ein Reservoir an Schmiermittel (nicht dargestellt) vorhanden ist, so dass dem Kühlmittel in Abhängigkeit von der aktuellen Bearbeitung und durch die CNC-Steuerung 3 automatisch gesteuert ein Schmiermittel in variablem Verhältnis beigemengt wird.

Des Weiteren umfasst die Kühlmittel- und Spänefördereinrichtung 19 einen Späneförderer 30 in Form eines Späneförderbandes 30, mit dem die bei der Bearbeitung des Werkstücks 16 entstehenden Späne aus dem Kühlmittelbehälter 20 transportiert werden. Das Späneförderband 30 umfasst einen Späneförderband-Antrieb 31, mit dem die Umlaufgeschwindigkeit des Späneförderbandes 30 stufenlos eingestellt und an die jeweils anfallende Menge an Spänen angepasst werden kann. Die abtransportierten Späne 33 werden schließlich in einem Spänebehälter 32 gesammelt.

Auch die Umlaufgeschwindigkeit des Späneförderbandes 30 wird so vorteilhaft mittels der CNC-Steuerung 3 in Abhängigkeit von in der CNC-Steuerung vorliegender, die aktuelle Bearbeitung betreffender Bearbeitungs- und/oder Prozessparameter, dynamisch an die aktuelle Bearbeitungssituation angepasst.

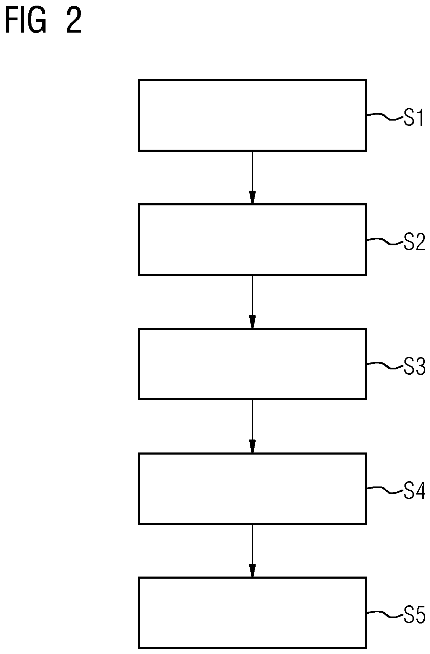

Nachfolgend werden die wesentlichen Verfahrensschritte bei der Durchführung eines erfindungsgemäßen Verfahrens nochmals in Form eines Ablaufdiagramms gemäß FIG 2 verdeutlicht. Dabei wird auch auf die in FIG 1 bezeichneten Komponenten des Werkzeugmaschinensystems 1 Bezug benommen.

In einem ersten Verfahrensschritt S1 werden ein Werkzeugmaschinensystem 1 (vgl. Fig 1), umfassend wenigstens eine Werkzeugmaschine 2, eine Steuereinrichtung, z.B. eine CNC-Steuerung 3, sowie eine Fördereinrichtung, z.B. eine Kühlmittel- und Spänefördereinrichtung 19, bereitgestellt.

In einem zweiten Verfahrensschritt S2 erfolgt mittels des Werkzeugmaschinensystems 1 eine zerspanende Bearbeitung eines Werkstücks 16 mittels eines Werkzeugs 13 in Abhängigkeit eines in der CNC-Steuerung 3 vorliegenden Teileprogramms.

In einem Verfahrensschritt S3 wird die Bearbeitung simuliert und anhand der Simulation die währende der Bearbeitung des Werkstücks 16 mittels des in Kontakt bzw. in Eingriff mit dem Werkstück 16 befindlichen Werkzeugs 13 erzeugte Wärme sowie die erzeugte Menge an Spänen ermittelt.

Die Simulation kann dabei parallel zur Bearbeitung des Werkstücks 16 erfolgen, sie kann aber auch bereits vor der Bearbeitung erfolgt sein.

Weiterhin kann die Simulation mittels der Steuereinrichtung 3 (CNC-Steuerung) des Werkzeugmaschinensystems 1, aber auch von einer weiteren, von der CNC-Steuerung 3 verschiedenen Steuerung erfolgen. Die weitere Steuerung kann ebenfalls von dem Werkzeugmaschinensystem 1 umfasst sein, es kann sich aber auch um eine externe, insbesondere über ein Netzwerk angebundene Steuerung, z.B. den externen PC 5, handeln.

In einem Verfahrensschritt S4 werden Betriebsparameter der Fördereinrichtung, z.B. Menge, Temperatur und Richtung des mittels der Kühlmittel- und Spänefördereinrichtung 19 zugführten Kühlmittels, Geschwindigkeit des Förderbandes 30 eines Späneförderers etc., dynamisch mittels der Steuereinrichtung (CNC-Steuerung 3) derart an die aktuelle Bearbeitungssituation angepasst, dass gerade die erzeugte Wärme bzw. die erzeugten Späne abgeführt werden, ohne dabei unnötig viel Kühlmittel oder Energie zu verbrauchen.

## Patentansprüche

1. Verfahren zur Steuerung eines Werkzeugmaschinensystems (1), umfassend wenigstens eine Werkzeugmaschine (2) eine Fördereinrichtung (19) sowie eine Steuereinrichtung (3),
- wobei zur Bearbeitung eines Werkstücks (16) ein Werkzeug (13) mittels der mit der Werkzeugmaschine (2) verbundenen Steuereinrichtung (3) und wenigstens einer davon gesteuerten Maschinenachse (X, Y, Z, B, C) relativ zu dem Werkstück (16) bewegt wird,
- wobei die Bearbeitung des Werkstücks (16) und insbesondere die Relativbewegung zwischen dem Werkzeug (13) und dem Werkstück (16) in Abhängigkeit von in der Steuereinrichtung (3) vorliegender Bearbeitungs- und/oder Prozessparameter erfolgt,
- wobei die Fördereinrichtung (19) mittels wenigstens eines Betriebsparameters der Fördereinrichtung (19) einstellbar ist und
- wobei der Betriebsparameter dynamisch während der Bearbeitung des Werkstücks (16) an wenigstens einen der Bearbeitungs- und/oder Prozessparameter angepasst wird.

2. Verfahren nach Anspruch 1, wobei die Fördereinrichtung (19) als Kühlmittel- und/oder Spänefördereinrichtung (19) ausgebildet ist, mittels der ein Fluidstrahl (25) zur Wärme- und/oder Späneabfuhr erzeugt wird,
wobei der Fluidstrahl (25) anhand von wenigstens einem Fluidstrahlparameter einstellbar ist
und wobei der Fluidstrahlparameter dynamisch während der Bearbeitung des Werkstücks (16) an den Bearbeitungs- und/oder Prozessparameter angepasst wird.

3. Verfahren nach Anspruch 2, wobei der Fluidstrahlparameter eine Durchflussmenge und/oder einen Druck und/oder eine Richtung und/oder eine Temperatur des Fluidstrahls (25) betrifft.

4. Verfahren nach Anspruch 1, wobei die Fördereinrichtung (19) als Kühlmittel- und/oder Spänefördereinrichtung (19) ausgebildet ist, wobei mittels eines Späneförderers (30) Späne aus der Werkzeugmaschine transportiert werden,
wobei der Späneförderer (30) anhand von wenigstens einem Spänefördererparameter einstellbar ist
und wobei der Spänefördererparameter dynamisch während der Bearbeitung des Werkstücks (16) an den Bearbeitungs- und/oder Prozessparameter angepasst wird.

5. Verfahren nach einem der vorherigen Ansprüche, wobei der Bearbeitungs- und/oder Prozessparameter eine Werkzeugbahn, einen Vorschub, eine Schnittgeschwindigkeit, eine Bahngeschwindigkeit, eine Spindeldrehzahl, einen Spindelstrom, ein aktives Werkzeug, ein Werkzeugmaterial, ein Werkstückmaterial, eine Materialpaarung, eine Kraft an der Spindel, eine Stromaufnahme der Spindel, eine Zerspanungsleistung, eine Abdrängung des Werkzeugs (13), eine Bearbeitungsart oder eine räumliche Anordnung des Werkzeugs (13) und/oder des Werkstücks (16) betrifft.

6. Verfahren nach einem der Ansprüche 2 bis 5, wobei für die Wärmeabfuhr und für eine Späneabfuhr jeweils wenigstens ein Minimum für Druck und/oder Menge des Fluidstrahls (25) bestimmt werden und wobei das größer der jeweiligen Minima für den Druck und/oder die Menge als Fluidstrahlparameter eingestellt wird.

7. Verfahren nach einem der vorherigen Ansprüche, wobei der Betriebsparameter mittels der Steuereinrichtung (3) bestimmt und/oder eingestellt wird.

8. Verfahren nach einem der vorherigen Ansprüche, wobei der Betriebsparameter mittels einer externen Recheneinrichtung (5) bestimmt und/oder eingestellt wird.

9. Verfahren nach einem der vorherigen Ansprüche, wobei der Betriebsparameter anhand einer Simulation der Bearbeitung des Werkstücks (16) bestimmt wird.

10. Verfahren nach Anspruch 9, wobei die Simulation mittels eines digitalen Zwillings wenigstens einer Komponente der Werkzeugmaschine (2) erfolgt.

11. Verfahren nach Anspruch 9 oder 10, wobei der Betriebsparameter mittels eines thermischen Modells der Bearbeitung ermittelt wird.

12. Verfahren nach einem der vorherigen Ansprüche, wobei mittels der Werkzeugmaschine (2) eine spanabhebende Bearbeitung des Werkstücks (16) durchgeführt wird, wobei die während der spanabhebenden Bearbeitung des Werkstücks (16) aufgrund von Reibung zwischen dem in Kontakt bzw. in Eingriff mit dem Werkstück (16) befindlichen Werkzeug (13) und dem Werkstück (16) erzeugte Wärme ermittelt wird und wobei der Betriebsparameter derart bestimmt wird, dass dadurch eine durch die Kühlmittelfördereinrichtung bewirkte Wärmeabfuhr dynamisch an die erzeugte Wärme angepasst wird.

13. Verfahren nach einem der vorherigen Ansprüche, wobei eine auf Basis des eingestellten Betriebsparameters beabsichtigte Betriebsweise der Kühlmittel- und/oder Spänefördereinrichtung (19) anhand eines digitalen Zwillings der Kühlmittel- und/oder Spänefördereinrichtung (19) verifiziert wird.

14. Verfahren nach einem der vorherigen Ansprüche, wobei der Betriebsparameter dynamisch während der Bearbeitung des Werkstücks (16) derart an den Bearbeitungs- und/oder den Prozessparameter angepasst wird, dass eine Leistungsaufnahme der Kühlmittel- und/oder Spänefördereinrichtung (19) auf ein notwendiges Minimum reduziert wird.

15. Steuereinrichtung (3) zur Steuerung einer Werkzeugmaschine (2) und einer der Werkzeugmaschine (2) zugeordneten Fördereinrichtung (19), insbesondere zur Durchführung eines Verfahrens nach einem der Ansprüche 1 bis 14,
- wobei zur Bearbeitung eines Werkstücks (16) ein Werkzeug (13) mittels der mit der Werkzeugmaschine (2) verbundenen Steuereinrichtung (3) und wenigstens einer davon gesteuerten Maschinenachse (X, Y, Z, B, C) relativ zu dem Werkstück (16) bewegbar ist,
- wobei die Bearbeitung des Werkstücks (16) und insbesondere die Relativbewegung zwischen dem Werkzeug (13) und dem Werkstück (13) in Abhängigkeit von in der Steuereinrichtung (3) vorliegender Bearbeitungs- und/oder Prozessparameter erfolgt,
- wobei die Fördereinrichtung (19) mittels wenigstens eines Betriebsparameters der Fördereinrichtung (19) einstellbar ist
- und wobei der Betriebsparameter dynamisch während der Bearbeitung des Werkstücks (16) an wenigstens einen Bearbeitungs- und/oder wenigstens einen Prozessparameter anpassbar ist.

16. Steuereinrichtung (3) nach Anspruch 15, wobei die Fördereinrichtung (19) als Kühlmittel- und/oder Spänefördereinrichtung (19) ausgebildet ist, wobei bei der Bearbeitung des Werkstücks (16) in der Werkzeugmaschine (2) Wärme und/oder Späne erzeugt wird bzw. werden und wobei die Wärme und/oder die Späne mittels der Kühlmittel- und/oder Spänefördereinrichtung (19) aus der Werkzeugmaschine (2) abgeführt wird bzw. werden und wobei die Kühlmittel- und/oder Spänefördereinrichtung (19) in ihrer Betriebsweise hinsichtlich Kühlmittel- und/oder Spänefördereigenschaften an den wenigstens einen Bearbeitungs- und/oder Prozessparameter anpassbar ist.

17. Digitaler Zwilling einer Steuereinrichtung (3) und/oder einer Werkzeugmaschine (2) und/oder einer Fördereinrichtung (19) zur Simulation eines Verfahrens nach einem der Ansprüche 1 bis 14.
